(19) Europäisches Patentamt
European Patent Office
Office européen des brevets

(11) Veröffentlichungsnummer: **0 468 162 A1**

(12) **EUROPÄISCHE PATENTANMELDUNG**

(21) Anmeldenummer: **91108626.2**

(22) Anmeldetag: **28.05.91**

(51) Int. Cl.5: **C08L 71/12**, C08L 77/06, C08L 69/00

(30) Priorität: **21.07.90 DE 4023232**

(43) Veröffentlichungstag der Anmeldung: **29.01.92 Patentblatt 92/05**

(84) Benannte Vertragsstaaten: **DE FR GB IT NL**

(71) Anmelder: **HÜLS AKTIENGESELLSCHAFT**
**Patentabteilung / PB 15 - Postfach 13 20**
**W-4370 Marl 1(DE)**

(72) Erfinder: **Kowalczik, Udo, Dr.**
**Am Nordbad 106**
**W-4630 Bochum 1(DE)**
Erfinder: **Bartmann, Martin, Dr.**
**Elper Weg 64**
**W-4350 Recklinghausen(DE)**
Erfinder: **Mügge, Joachim, Dr.**
**Kantstrasse 14**
**W-4358 Haltern(DE)**
Erfinder: **Neugebauer, Wolfgang, Dr.**
**Karl-Leisner-Strasse 3**
**W-4408 Dülmen-Merfeld(DE)**

(54) **Thermoplastische Formmassen auf Basis modifizierter Polyphenylenether.**

(57) 2. Ziel der Erfindung war, die mechanischen Eigenschaften von Polyphenylenether enthaltenden Formmassen zu verbessern. Dies wird nun mit Formmassen erreicht, die folgende Komponenten enthalten:

a) Polyphenylenether, die durch oxidative Kupplung von 99,8 bis 95 Mol-% Phenolen der Formel I und 0,2 bis 5 Mol-% von Phenolen der Formel II hergestellt werden,

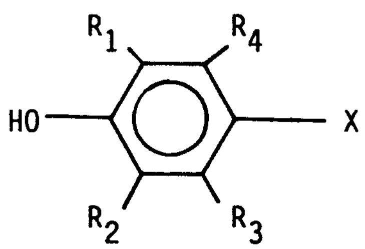

I

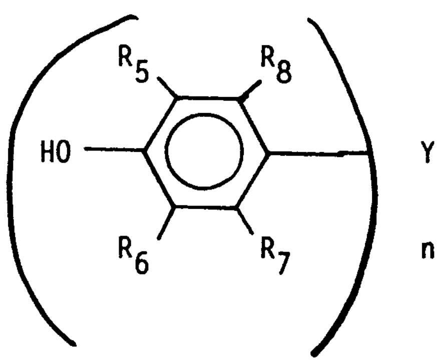

II

b) Monomere oder Polymere, die Doppelbindungen enthalten,

c) ggf. Polykondensate.

Diese Formmassen eignen sich für die Herstellung von technischen Artikeln für den Automolbil-, Elektro- und Feinwerksektor.

EP 0 468 162 A1

Die vorliegende Erfindung beschreibt thermoplastische Formmassen mit verbesserten mechanischen Eigenschaften auf Basis modifizierter Polyphenylenether.

Polyphenylenether (PPE) sind technische Hochleistungsthermoplaste mit hohen Schmelzviskositäten und Erweichungspunkten. Sie kommen vor allem dort zum Einsatz, wo es auf Beständigkeit bei hohen Temperaturen ankommt (vgl. US-PSS 3 306 874, 3 306 875, 3 257 357 und 3 257 358). Formteile aus reinen Polyphenylenethern sind allerdings wegen ihrer schlechten Schlagzähigkeit spröde und die Lösemittelbeständigkeit ist unbefriedigend; daher setzt man üblicherweise Mischungen aus Polyphenylenethern mit anderen Thermoplasten ein.

Die DE-OS 35 18 277 beschreibt z. B. thermoplastische Formmassen auf der Basis von Polyphenylenether und Polyoctenylen, welche sich durch hohe Schlagzähigkeit, hervorragende Wärmeformbeständigkeit und gute Verarbeitbarkeit auszeichnen.

Im Gegensatz zu diesen und ähnlichen Legierungen mit amorpher Matrix weisen Abmischungen mit Polyamiden bzw. Polyestern eine sehr gute Lösemittelbeständigkeit auf; in der Regel werden allerdings spröde Produkte erhalten, da die beiden Komponenten unverträglich sind (DE-OSS 16 94 290 und 30 27 104). In der EP-OS 0 024 120 wird versucht, durch Zugabe einer dritten Komponente, wie einem flüssigen Dienpolymer, einem Epoxid oder einer Verbindung mit einer Doppel- oder Dreifachbindung und einer funktionellen Gruppe, eine gewisse Verträglichkeit herzustellen. Die Zähigkeit der erhaltenen Harzmassen reicht aber für viele Anwendungen nicht aus. Eine bessere Verträglichkeit der beiden Phasen wird durch eine Funktionalisierung des Polyphenylenethers z. B. mit Maleinsäureanhydrid, ggf. zusammen mit weiteren synergistisch wirkenden Substanzen, erzielt (siehe z. B. EP-OS 0 232 363, DE-OS 36 15 393, DE-OS 36 21 805 sowie JP-OS 84/86 653). Wegen der Flüchtigkeit und Toxizität von Maleinsäureanhydrid sind hierbei umfangreiche Schutzvorrichtungen nötig, um Gefährdung bzw. Belästigung des Personals weitgehend auszuschließen.

Ein weiterer Ansatzpunkt zum Erzielen einer Verträglichkeit zwischen Polyphenylenether und anderen Polymeren besteht darin, daß man in den Polyphenylenether schon im Stadium der oxidativen Kupplung durch Zusatz geeigneter funktionalisierter Comonomerer reaktive Stellen einbaut, die beim Mischen mit den anderen Polymeren mit diesen reagieren können.

Beispielsweise wird in der US-PS 4 129 555 bei der Herstellung von Polyphenylenether ein substituiertes Aminomethylphenol mit eingesetzt. Die eingebauten Aminomethylgruppen sollen bewirken, daß Blends dieses Polyphenylenethers mit Polystyrolharzen eine bessere Schlagzähigkeit aufweisen.

In der EP-OS 0 338 209 wird gezeigt, daß ein Polyphenylenether mit endständigen funktionellen Gruppen wie Oxazolinyl, Amid, Ester, Imid oder Carbonyl eine gute Verträglichkeit mit Polyamiden aufweist. Als Grund dafür kann die Reaktion der funktionellen Gruppen mit Polyamid-Endgruppen angenommen werden.

Ein Nachteil dieser bisher bekannten Polyphenylenether-Copolymeren ist jedoch, daß sie nur einer begrenzten Auswahl von Blendkomponenten gegenüber wirksam sind. Zudem sind die benötigten Comonomeren teilweise schwer zugänglich.

Es wurde nun überraschend aufgefunden, daß thermoplastische Formmassen, welche bestimmte modifizierte Polyphenylenether enthalten, deutlich bessere mechanische Eigenschaften aufweisen als Formmassen auf Basis unmodifizierter Polyphenylenether.

In der DE-OS 17 45 201 werden Polyphenylenether beschrieben, die durch Zusatz von para-substituierten Phenolen als Comonomer in der Kettenlänge geregelt sind. In den Beispielen werden bis zu 30 Mol-% des regelnden Comonomeren eingesetzt. Die Regelung verbessert hierbei die Fließfähigkeit und die Verformbarkeit des entstandenen Polyphenylenethers. Über dessen eventuelle Eignung für die Herstellung von Formmassen werden keine Angaben gemacht. Im Gegenteil ist zu erwarten, daß derartige geregelte Polyphenylenether wegen des niedrigeren Molekulargewichts nur Formmassen mit schlechten mechanischen Eigenschaften ergeben.

Die bereits genannte EP-OS 0 338 209 gibt die Lehre, daß Formmassen, die geregelte Polyphenylenether enthalten, nur in einem engumgrenzten Bereich gute Eigenschaften aufweisen.

Dieser Bereich ist dadurch begrenzt, daß

a) der Polyphenylenether endständig Oxazolin-, Amid-, Ester-, Imid- oder Keto- bzw. Aldehydgruppen besitzt, die vom Einbau eines entsprechend para-substituierten Phenols als Regler bei der oxidativen Kupplung herrühren;

b) als weitere Komponente ein Polyamid in der Formmasse enthalten ist.

Dem Fachmann ist klar, daß derartige funktionalisierte Polyphenylenether beim Schmelzemischen mit Polyamiden über ihre funktionelle Gruppe teilweise mit den reaktiven Endgruppen der Polyamide unter Verknüpfen der Polymerketten reagieren, was eine gewisse Phasenhaftung dieser ansonsten vollkommen miteinander unverträglichen Polymeren ergibt. Jedoch sind die mechanischen Eigenschaften dieser Formmassen nicht in jedem Fall befriedigend.

Es wurden nun thermoplastische Formmassen mit verbesserten mechanischen Eigenschaften aufgefunden, die folgende Komponenten enthalten:

a) Polyphenylenether, welche durch oxidative Kupplung von 99,8 bis 95 Mol-% Phenolen der allgemeinen Formel I und 0,2 bis 5 Mol-% von Phenolen der allgemeinen Formel II hergestellt werden,

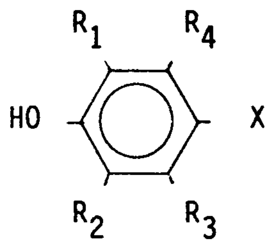

I

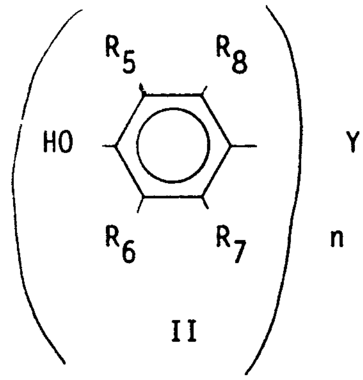

II

wobei $R_1$ und $R_2$ gleich Alkyl mit 1 bis 6 C-Atomen oder Phenyl beziehungsweise $R_1$ gleich tert.-Butyl und $R_2$ gleich H;

$R_3$ und $R_4$ gleich Alkyl mit 1 bis 6 C-Atomen oder bevorzugt H;

$R_5$ und $R_6$ gleich Alkyl mit 1 bis 6 C-Atomen;

$R_7$ und $R_8$ gleich $R_3$ und $R_4$;

X = Cl, Br, J oder bevorzugt H;

Y ist ein beliebiger Rest, ausgenommen Halogen;

n = 1 oder 2;

b) Monomere oder Polymere, die Doppelbindungen enthalten;

c) ggf. Polykondensate;

wobei die Vereinigung und Reaktion der Komponenten (a) und (b) vor dem eventuellen Zusatz der Komponente (c) erfolgt.

Bevorzugt werden auf 100 Gew.-Teile der Komponente (a) 0,5 bis 70 Gew.-Teile der Komponente (b) und maximal 250 Gew.-Teile der Komponente (c) eingesetzt.

Als Phenole der allgemeinen Formel I können beispielsweise folgende monomere eingesetzt werden: 2-Methyl-6-ethylphenol, 2,6-Diethylphenol, 4-Brom-2,6-dimethylphenol, 3-Methyl-6-tert.-butylphenol, 4-Brom-2,6-diphenylphenol, 2-Benzyl-6-methylphenol, 2,3,6-Trimethylphenol oder bevorzugt 2,6-Dimethylphenol. Selbstverständlich können auch Gemische derartiger Phenole verwendet werden.

Bei den Phenolen der allgemeinen Formel II kann Y im Prinzip ein beliebiger Rest sein, Halogen ausgenommen. Der Fachmann wird aufgrund des Standes der Technik den Rest Y jedoch so wählen, daß das Phenol der allgemeinen Formel II unter den Bedingungen der oxidativen Kupplung kein Chinon ergibt. Daher wird Y im allgemeinen weder eine Hydroxyl- noch eine Aminogruppe darstellen. Aus dem gleichen Grunde kann Y für n = 2 keine direkte Bindung sein.

Wesentlich für II ist lediglich eine regelnde Wirkung auf den Mechanismus der oxidativen Kupplung. Y kann somit im Falle n = 1 sowohl eine Amid-, Ester-, Imid-, Oxazolinyl- oder Carbonylgruppe aufweisen, als auch Alkyl, Aryl oder eine sonstige Gruppierung wie z. B. auch ein Polykondensatblock sein (siehe die DE-OS 39 10 825).

Im Fall n = 2 ist Y eine zweiwertige Gruppe analog zu den Gruppen im Fall n = 1; beispielsweise Alkylen, Alkyliden, Arylen; es können aber auch z. B. zwei Amid-, Ester- oder Imidgruppen durch einen zweiwertigen Rest miteinander verknüpft sein. Dieser zweiwertige Rest kann auch ein Polykondensatblock sein; derartige Verbindungen sind in der DE-OS 39 10 825 beschrieben.

Beispiele für geeignete Phenole der allgemeinen Formel II sind 2.4.6-Trimethylphenol, 4-Benzyl-2.6-dimethylphenol, 2.6-Dimethyl-4-phenylphenol, 2.6-Diethyl-4-cyclohexylphenol, 2.6-Dimethyl-4-isopropylphenol, 2.6-Dimethyl-4-tert.-butylphenol, 2.3.4.6-Tetramethylphenol, 4-Hydroxy-3,5-dimethylbenzoesäuremethylester, (4-Hydroxy-3,5-dimethylphenyl)essigsäureethanolamid, 3-(4-Hydroxy-3,5-dimethylphenyl)-propionsäureethylester, (4-Hydroxy-3,5-dimethylphenyl)phenylessigsäure-butandiol-(1.4)-halbester, 3-(4-Hydroxy-3,5-dimethylphenyl)-3-phenylpropionsäureamid, 2-(4-Hydroxy-3,5-dimethylphenyl)-2-oxazolin, 2,6-Dibutyl-4-hydroxymethylphenol, 2,6-Dimethyl-4-(2-hydroxyethyl)phenol, 3,3',5,5'-Tetramethylbisphenol A; Bisamide von Diaminen wie Ethylendiamin, Hexamethylendiamin, Trimethylhexamethylendiamin, Octamethylendiamin, Nonamethylendiamin, Decamethylendiamin, Dodecamethylendiamin, Isophorondiamin bzw. Bis-(p-aminocyclohexyl)methan oder ähnlichen Diaminen und phenolischen Carbonsäuren wie 4-Hydroxy-3,5-dimethylbenzoesäure, (4-Hydroxy-3,5-dimethylphenyl)essigsäure, 3-(4-Hydroxy-3,5-dimethylphenyl)-propionsäure, (4-Hydroxy-3,5-dimethylphenyl)phenylessigsäure oder 3-(4-Hydroxy-3,5-dimethylphenyl)-3-phenylpropionsäure; entsprechende Diester von Diolen wie Ethylenglykol, Diethylenglykol, Propylenglykol, Neopentylglykol, 1,4-Butandiol, 1,6-Hexandiol, 1,12-Dodecandiol, 1.4-Cyclohexandimethanol oder Polytetrahydrofurandiol mit den obengenannten Säuren.

Im Vorzugsbereich werden 99,6 bis 97 Mol-% an Phenol I und 0,4 bis 3 Mol-% an Phenol II eingesetzt. Besonders bevorzugt ist die Verwendung von 99,5 bis 98 Mol-% Phenol I und 0,5 bis 2 Mol-% an Phenol II.

Die modifizierten Polyphenylenether weisen eine Viskositätszahl J, gemessen nach DIN 53 728 bei 25 °C in Chloroform (Konzentration 5 g/l) vorzugsweise im Bereich von 20 bis 80 $cm^3/g$ auf, wobei die Darstellung dieser Polyphenylenether nach jedem dem Stand der Technik entsprechenden Verfahren durchgeführt werden kann. Üblicherweise erfolgt diese durch Oxidation des Phenolgemisches mit einem Sauerstoff enthaltenden Gas, wie z. B. Luft, in Gegenwart eines Kupfer-Amin- oder eines Mangankatalysators (vgl. DE-OS 32 24 692, DE-OS 32 24 691, US-PS 3 306 874 und US-PS 3 306 875).

Als doppelbindungshaltige Monomere kommen alle in Frage, die sich im Temperaturbereich oberhalb ca. 150 °C unzersetzt handhaben lassen.

Beispiele für geeignete doppelbindungshaltige Monomere sind Hexen-(1), Cyclohexen, Cyclododecen, Styrol, Inden, Maleinsäureanhydrid, Fumarsäure, Malein- und Furmarsäuredialkyl- oder -diphenylester, N-Phenylmaleinimid, N-Phenylmaleinamidsäure, Acryl- oder Methacrylsäure, β-Hydroxyethylmethacrylat, Allylalkohol, Allylamin, Isopropenyloxazolin, Glycidylmethacrylat, Acrylnitril, Zimtsäurenitril, Vinyltrimethoxysilan oder 3-Methacryloxypropyltrimethoxysilan. Besonders bevorzugt ist Maleinsäureanhydrid.

Wenn die Formmasse Polykondensate enthält, werden bevorzugt doppelbindungshaltige Monomere eingesetzt, die mindestens eine funktionelle Gruppe tragen. Geeignete funktionelle Gruppen sind beispielsweise die Carboxyl-, Säureanhydrid-, Säureamid-, Imid-, Ester-, Amino-, Hydroxyl-, Oxazolin-, Epoxid-, Nitril- oder Trialkoxysilangruppe.

Wenn die Formmasse keine Polykondensate enthält, werden Styrol, substituierte Styrole, Inden, Fumarsäuredibutylester oder Maleinsäureanhydrid besonders bevorzugt.

Doppelbindungshaltige Polymere können die Doppelbindungen entweder in der Hauptkette oder in Seitengruppen tragen. Im Durchschnitt sollte pro Polymermolekül mindestens circa eine Doppelbindung vorhanden sein. Geeignete doppelbindungshaltige Polymere sind beispielsweise Polybutadien, Polyisopren, schlagzähes Polystyrol (HIPS), Styrol-Butadien-Kautschuk (statistische, verschmierte oder Blockcopolymere), Ethylen-α-Olefin-Dien-Terpolymere wie z. B. EPDM, Polypentenylen, Polyoctenylen oder Mischungen daraus. Die doppelbindungshaltigen Polymeren können dem Stand der Technik entsprechend funktionalisiert sein (siehe etwa die US-PSS 3 236 917, 3 862 265, 3 873 643, 3 882 194 und 4 026 967 sowie die DE-OSS 22 16 718, 24 01 149 und 21 08 749), z. B. durch Umsetzung mit Maleinsäureanhydrid oder Fumarsäureestern.

Die Reaktion der Komponenten (a) und (b) erfolgt im Temperaturbereich zwischen 150 und 350 °C entweder in Lösung, ggf. unter Druck, oder in der Schmelze. Im ersten Fall geht man von der bei der oxidativen Kupplung erhaltenen Lösung aus und arbeitet das Produkt vorzugsweise durch ein Direktisolationsverfahren auf, besonders bevorzugt durch Abdampfen des Lösemittels etwa durch Flashen und anschließendes Extrudieren unter Entgasungsbedingungen. Im zweiten Fall arbeitet man unter den üblichen Extrusionsbedingungen; beim Einsatz flüchtiger ungesättigter Monomerer müssen hier Vorkehrungen gegen übermäßiges Ausdampfen getroffen werden, wie sie dem Fachmann bekannt sind. Eine Entgasung in der letzten Zone des Extruders ist in diesem Fall vorteilhaft.

Typische Beispiele geeigneter Polykondensate sind Polyamide, Polyester, Polycarbonate sowie gemischte Typen wie Polyesteramide oder Polyestercarbonate. Es können auch Gemische verschiedener Polykondensate verwendet werden. Polyamide, Polyester und/oder Polycarbonate sind besonders bevorzugt.

Als Polyamide kommen Homo- und Copolymere in Frage, die vorzugsweise ausschließlich aliphatischer Struktur sind. Insbesondere seien hier die 6-, 46-, 66-, 612-, 1010-, 1012-, 11-, 12- und 1212-Polyamide aufgeführt. Die Kennzeichnung der Polyamide entspricht internationaler Norm, wobei die erste(n) Ziffer(n) die C-Atomzahl des Ausgangsamins und die letzte(n) Ziffer(n) die C-Atomzahl der Dicarbonsäure angeben. Wird nur eine Zahl angegeben, so bedeutet dies, daß von einer Aminocarbonsäure bzw. deren Lactam ausgegangen wird (H. Domininghaus, "Die Kunststoffe und ihre Eigenschaften", VDI Verlag, 1976, Seite 272). Geeignet sind aber auch gemischte aliphatisch-aromatische Copolyamide (vgl. US-PSS 2 011 250, 2 071 251, 2 130 523, 2 130 948, 2 241 322, 2 312 966, 2 512 606, 3 393 210; Kirk-Othmer, Encyclopedia of

chemical technology, Vol. 18, John Wiley & Sons (1982), Seiten 328 und 435). Das Zahlenmittel des Molekulargewichts der Polyamide sollte über 5 000, vorzugsweise über 10 000, liegen.

Geeignete Polyester leiten sich von aromatischen Dicarbonsäuren mit 8 bis 16 C-Atomen her, die zum Teil durch aliphatische oder cycloaliphatische Dicarbonsäuren ersetzt sein können, sowie von aliphatischen, cycloaliphatischen oder aromatischen Diolen. Als aromatische Dicarbonsäuren kommen z. B. in Frage Terephthalsäure, Isophthalsäure, Phthalsäure, Homophthalsäure, o-, m-, p-Phenylendiessigsäure, 2,6-, 2,7-, 1,5-, 1,4-Naphthalindicarbonure, Diphensäure, Diphenylether-4,4'-dicarbonsäure oder deren Mischungen; andere, in kleinerem Teil enthaltene Dicarbonsäuren sind z. B. Adipinsäure, Sebacinsäure oder Dodecandisäure. Die aliphatischen und cycloaliphatischen Diole sind z. B. Ethylenglykol, Trimethylenglykol, Tetramethylenglykol, Hexamethylenglykol, 1,4-Cyclohexandimethanol und Neopentylglykol; die aromatischen Diole sind Bisphenole aus der Reihe Hydrochinon, Resorcin, Bisphenol A, Bisphenol T, Tetramethylbisphenol A, 4,4'-Dihydroxybiphenyl u. a. Bevorzugte Polyester sind Polyethylenterephthalat, Polybutylenterephthalat und Poly(bisphenol A-iso-co-terephthalat).

Als Polycarbonate kommen insbesondere die aromatischen Typen in Frage, die dem Fachmann allgemein bekannt sind; vgl. z. B. Kirk-Othmer, Encyclopedia of chemical technology, Vol. 18, John Wiley & Sons (1982), Seiten 479 bis 494. Sie werden durch Reaktion eines Bisphenols mit einer Carbonatvorstufe, wie Phosgen, einem Chlorkohlensäureester oder Kohlensäureester erhalten. Typische Bisphenole sind Bisphenol A, Bisphenol T, Tetramethylbisphenol A oder Tetramethylbisphenol S. Das bevorzugte Polycarbonat ist das Homopolymere, das sich von Bisphenol A herleitet.

Darüber hinaus können bis maximal 40 Gew.-%, bezogen auf die gesamte Formmasse, noch weitere Polymere enthalten sein wie z. B. Polyethylen, Polypropylen, Ethylen-Propylen-Kautschuk, ggf. mit Maleinsäureanhydrid oder ähnlichem funktionalisiert, glasklares Polystyrol, hydrierte Styrol-Butadien-Blockcopolymere wie z. B. SEBS oder Styrol-Maleinsäureanhydrid-Copolymere.

Die erfindungsgemäßen Formmassen haben deutlich bessere mechanische Eigenschaften als vergleichbare, mit ungeregelten Polyphenylenethern hergestellte Formmassen. Insbesondere die Schlag- bzw. Kerbschlagzähigkeit, die thermische und thermooxidative Beständigkeit sowie die Spannungsrißbeständigkeit sind verbessert.

Verbesserte mechanische Eigenschaften werden vor allem bei folgenden Abmischungen erhalten:

I. Modifizierte Polyphenylenether mit doppelbindungshaltigen Polymeren, die als Schlagzähkomponente geeignet sind. Diese können dem Stand der Technik entsprechend funktionalisiert sein (siehe etwa die US-PSS 3 236 917, 3 862 265, 3 873 643, 3 882 194 und 4 026 967 sowie die DE-OSS 22 16 718, 24 01 149, 21 08 749 und 38 31 348, z. B. durch Umsetzung mit Maleinsäureanhydrid oder Fumarsäureestern. Derartige Formmassen können darüber hinaus auch Polystyrol enthalten. In einer bevorzugten Ausführungsform sind auf 100 Gew.-Teile Polyphenylenether mindestens 2 Gew.-Teile doppelbindungshaltiger Polymerer enthalten.

II. Modifizierte Polyphenylenether mit ungesättigten, mindestens eine funktionelle Gruppe tragenden Monomeren. Derartige Produkte sind vor allem für Formmassen geeignet, die verstärkende Fasern oder Füllstoffe enthalten. In einer bevorzugten Ausführungsform werden auf 100 Gew.-Teile Polyphenylenether 0,5 bis 5 Gew.-Teile solcher Monomerer verwendet.

III. Abmischungen der Produkte aus I. oder II. mit Polyamiden. Geht man von II. aus, kann auch eine Schlagzähkomponente anwesend sein, die vorzugsweise funktionalisiert ist, wie beispielsweise mit Maleinsäureanhydrid gepfropfter EPM-Kautschuk.

IV. In einer bevorzugten Ausführungsform von III. geht man von I. aus, funktionalisiert dann das Gemisch auf bekannte Weise, z. B. mit Maleinsäureanhydrid, ggf. zusammen mit weiteren synergistisch wirkenden Substanzen, und mischt anschließend mit Polyamid.

Die Vereinigung der modifizierten Polyphenylenether mit anderen Polymeren kann nach allen Methoden des Standes der Technik erfolgen. Man kann entweder über Lösungen mischen, wobei anschließend einkonzentriert und unter Entgasungsbedingungen extrudiert wird; in der Regel jedoch erfolgt die Vereinigung der modifizierten Polyphenylenether mit den anderen Polymeren ausgehend von einer Trockenmischung in einem gut knetenden Aggregat, z. B. einem Doppelschneckenextruder, bei Temperaturen von etwa 250 bis 350 °C, vorzugsweise 260 bis 310 °C. In den Fällen, in denen mehrfach hintereinander zugemischt werden muß (siehe z. B. III. und IV.), kann man entweder eine Vorformmasse herstellen, die dann weiter abgemischt wird, oder bevorzugt in einer einstufigen Arbeitsweise die weiteren Polymeren über eine Zwischendosierung in die Schmelze der Vormischung eingeben.

Die erfindungsgemäßen thermoplastischen Massen können daneben einen Flammschutz sowie weitere Zusatzstoffe, wie Pigmente, Oligo- und Polymere, Antistatika, Stabilisatoren und Verarbeitungshilfsmittel sowie Verstärkungsmittel, enthalten. Der Anteil der Verstärkungsmittel kann bis zu 50 %, der der Flammschutzmittel bis zu 15 % und der aller übrigen Zusatzstoffe insgesamt bis zu 5 %, jeweils bezogen auf die

gesamte Formmasse, betragen.

Als Flammschutzmittel sind besonders aromatische Phosphorverbindungen, wie Triphenylphosphinoxid und Triphenylphosphat, geeignet. Man kann auch ein übliches halogenhaltiges Flammschutzmittel verwenden. In Frage kommen dabei Halogen enthaltende organische Verbindungen, wie sie z. B. in der Monographie von H. Vogel "Flammfestmachen von Kunststoffen", Hüthig-Verlag, 1966, auf den Seiten 94 bis 102 beschrieben werden. Es kann sich dabei aber auch um halogenierte Polymere, wie z. B. halogenierte Polyphenylenether (siehe DE-OS 33 34 068) oder bromierte Oligo- bzw. Polystyrole, handeln. Die Verbindungen sollen mehr als 30 Gewichtsprozent Halogen enthalten.

Im Falle des Einsatzes von halogenhaltigen Flammschutzmitteln empfiehlt es sich, einen Synergisten zu verwenden. Geeignet sind Verbindungen des Antimons, Bors und des Zinns. Diese werden im allgemeinen in Mengen von 0,5 bis 10 Gewichtsprozent, bezogen auf die thermoplastischen Massen, eingesetzt.

Als Verstärkungsmittel eignen sich insbesondere Glas- und Kohlenstoffasern.

Geeignete Stabilisatoren umfassen organische Phosphite, wie z. B. Didecylphenylphosphit und Trilaurylphosphit, sterisch gehinderte Phenole sowie Tetramethylpiperidin-, Benzophenon- und Triazolderivate.

Als Verarbeitungshilfsmittel eignen sich Wachse, wie z. B. oxidierte Kohlenwasserstoffe sowie ihre Alkali- und Erdalkalisalze.

Die erhaltenen Formmassen lassen sich mit den für die Thermoplastverarbeitung üblichen Verfahren, wie z. B. Spritzgießen und Extrusion, zu Formkörpern verarbeiten.

Beispiele für technische Anwendungsgebiete sind Rohre, Platten, Gehäuse und sonstige technische Artikel für den Automobil-, Elektro- und Feinwerksektor.

In den folgenden Beispielen wurde die Viskositätszahl (J) des Polyphenylenethers nach DIN 53 728 bei 25 °C in Chloroform (Konzentration 5 g/l) in $cm^3/g$ gemessen.

Die relative Viskosität $Eta_{rel}$ des Polyamids wurde mit einem Ubbelohde-Viskosimeter bei 25 °C in m-Kresol (Konzentration 5 g/l) bestimmt.

Die Reißdehnung (Epsilon $_R$) wurde nach DIN 53 455 an bei 290 °C gespritzten Schulterstäben bestimmt.

Zur Messung der Kerbschlagzähigkeit $a_k$ nach DIN 53 453 bei 23 °C wurden bei 290 °C gespritzte Normkleinstäbe mit Rechteckkerbe verwendet.

1. Herstellung von modifizierten Polyphenylenethern

Beispiel 1.1

Eine Lösung von 18 kg 2,6-Dimethylphenol (99,5 Mol-%) und 0,101 kg 2,4,6-Trimethylphenol (0,5 Mol-%) in 18 kg Toluol wird unter Luftbegasung innerhalb von 30 Minuten in eine gerührte, auf 30 °C thermostatisierte Mischung aus 156,0 kg Toluol, 23,64 kg Methanol, 3,6 kg Di-n-butylamin, 182,4 g $CuCl_2$ • 2 $H_2O$ und 182,4 g Di-tert.-butylethylendiamin gegeben. Nach einer Gesamtreaktionszeit von 130 min wird die Reaktion durch Zugabe von 51 l Wasser und 996 g Ethylendiamin-N,N,N',N'-tetraessigsäure-Dinatriumsalz gestoppt.

Nach erfolgter Phasentrennung und zweimaliger Wäsche bei 80 °C, jeweils mit einer Mischung aus 60 l Wasser und 180 g Triethanolamin, wird das Produkt mit 200 kg Methanol gefällt, zweimal mit je 100 kg Methanol gewaschen und anschließend getrocknet.

Ausbeute: 16,4 kg
J-Wert : 55 $cm^3/g$

Beispiel 1.2

Analog zu Beispiel 1.1 werden 18 kg 2,6-Dimethylphenol (98,5 Mol-%) und 0,638 kg 2-(3,5-Dimethyl-4-hydroxyphenyl)-2-phenylessigsäureethylester (1,5 Mol-%) umgesetzt. Die Gesamtreaktionszeit beträgt 150 min.

Ausbeute: 16,0 kg
J-Wert : 41 $cm^3/g$

Beispiel 1.3

Analog zu Beispiel 1.1 werden 18 kg 2,6-Dimethylphenol umgesetzt. Die Reaktionszeit beträgt 70 min.

Ausbeute: 16,8 kg
J-Wert : 53 $cm^3/g$

2. Herstellung von Formmassen

Die Herstellung der Formmassen erfolgt auf einem Leistritz-Doppelschneckenextruder mit der Typenbezeichnung LSM 30.34. Die granulierten und getrockneten Produkte werden zu Normkörpern verspritzt und anschließend geprüft. Die jeweiligen Prüfergebnisse können der Tabelle entnommen werden.

Die Beispiele A bis D sind hierbei nicht erfindungsgemäß und dienen zu Vergleichszwecken.

Beispiel 2.1

5,4 kg Polyphenylenether gemäß Beispiel 1.1 werden mit 0,6 kg VESTENAMER$^R$ 8012 (Polyoctenylen (TOR) der Firma Hüls AG, D-4370 Marl) bei 290 °C in der Schmelze gemischt. Der extrudierte Strang wird im Wasserbad gekühlt, anschließend granuliert und getrocknet.

Beispiel 2.2

Analog Beispiel 2.1 mit 5,4 kg Polyphenylenether gemäß Beispiel 1.2.

Beispiel A

Analog Beispiel 2.1 mit 5,4 kg Polyphenylenether gemäß Beispiel 1.3.

Beispiel 2.3

5,4 kg Polyphenylenether gemäß Beispiel 1.1 werden mit 0,6 kg BUNA$^R$ AP 437 (Ethylen-Propylen-Dien-Terpolymer (EPDM) der Firma Hüls AG, D-4370 Marl) bei 280 °C in der Schmelze gemischt.

Beispiel B

Analog Beispiel 2.3 mit 5,4 kg Polyphenylenether gemäß Beispiel 1.3.

Beispiel 2.4

3,96 kg Polyphenylenether gemäß Beispiel 1.1 werden mit 0,040 kg Maleinsäureanhydrid trocken vorgemischt und bei 280 °C extrudiert, anschließend granuliert und getrocknet.

2,0 kg des so hergestellten funktionalisierten Polyphenylenethers werden mit 3,0 kg Polyamid 12 ($Eta_{rel}$ = 1,91) bei 290 °C in der Schmelze gemischt.

Beispiel C

Analog Beispiel 2.4 mit 3,96 kg Polyphenylenether gemäß Beispiel 1.3.

Beispiel 2.5

Entsprechend Beispiel 2.1 wird eine Vorformmasse aus 4,5 kg Polyphenylenether gemäß Beispiel 1.2 und 0,5 kg VESTENAMER$^R$ 8012 hergestellt.

4,0 kg dieser Vorformmasse werden mit 6,0 kg Polyamid 12 ($Eta_{rel}$ = 1,91) bei 290 °C in der Schmelze gemischt.

Beispiel D

Eine Granulatmischung aus 3,6 kg Polyphenylenether gemäß Beispiel 1.2, 0,4 kg VESTENAMER$^R$ 8012 und 6,0 kg Polyamid 12 ($Eta_{rel}$ = 1,91) wird bei 290 °C in der Schmelze gemischt.

Tabelle 1

| Beispiel | PPE (Gew.-Tle.) | Ungesätt. Verb. (Gew.-Tle.) | Polykondensat (Gew.-Tle.) | Kerbschlagzähigkeit (DIN 53 453) bei RT ($kJ/m^2$) | Reißdehnung: $Epsilon_R$ in % |
|---|---|---|---|---|---|
| 2.1 | 90 | 10 TOR | - | 33 | |
| 2.2 | 90 | 10 TOR | - | 34 | *) |
| A | 90 | 10 TOR | - | 29 | *) |
| 2.3 | 90 | 10 EPDM | - | 22 | *) |
| B | 90 | 10 EPDM | - | 13,5 | *) |
| 2.4 | 39,6 | 0,4 MSA a) | 60 PA 12 | 10 | 94 |
| C | 39,6 | 0,4 MSA a) | 60 PA 12 | 7 | 63 |
| 2.5 | 36 | 4 TOR | 60 PA 12 | 18 | 57 |
| D | 36 | 4 TOR | 60 PA 12 | 7 | 38 |

a) Maleinsäureanhydrid; *) nicht bestimmt

## Patentansprüche

1. Thermoplastische Formmassen, die folgende Komponenten enthalten:
   a) Polyphenylenether, welche durch oxidative Kupplung von 99,8 bis 95 Mol-% Phenolen der

allgemeinen Formel I und 0,2 bis 5 Mol-% von Phenolen der allgemeinen Formel II hergestellt werden,

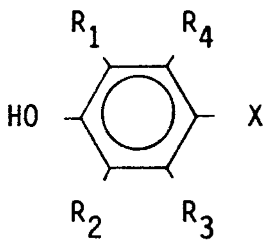

I

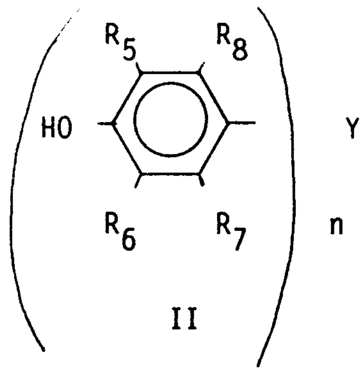

II

wobei $R_1$ und $R_2$ gleich Alkyl mit 1 bis 6 C-Atomen oder Phenyl beziehungsweise $R_1$ gleich tert.-Butyl und $R_2$ gleich H;
$R_3$ und $R_4$ gleich Alkyl mit 1 bis 6 C-Atomen oder bevorzugt H;
$R_5$ und $R_6$ gleich Alkyl mit 1 bis 6 C-Atomen;
$R_7$ und $R_8$ gleich $R_3$ und $R_4$;
X = Cl, Br, J oder bevorzugt H;
Y ist ein beliebiger Rest, ausgenommen Halogen;
n = 1 oder 2;
b) Monomere oder Polymere, die Doppelbindungen enthalten;
c) ggf. Polykondensate;

wobei die Vereinigung und Reaktion der Komponenten (a) und (b) vor dem eventuellen Zusatz der Komponente (c) erfolgt.

**2.** Thermoplastische Formmassen gemäß Anspruch 1,
dadurch gekennzeichnet,
daß der Polyphenylenether durch oxidative Kupplung von 99,6 bis 97 Mol-% an Phenol I und 0,4 bis 3 Mol-% an Phenol II hergestellt wird.

**3.** Thermoplastische Formmassen gemäß den Ansprüchen 1 oder 2,
dadurch gekennzeichnet,
daß als Phenol I 2,6-Dimethylphenol eingesetzt wird.

**4.** Thermoplastische Formmassen gemäß den Ansprüchen 1 bis 3,
dadurch gekennzeichnet,
daß im Phenol II Y ein einwertiger oder zweiwertiger Polykondensatblock ist.

**5.** Thermoplastische Formmassen gemäß den Ansprüchen 1 bis 4,
dadurch gekennzeichnet,
daß als Komponente (b) Polyoctenylen, EPDM und/oder doppelbindungshaltige funktionelle Monomere eingesetzt werden.

**6.** Thermoplastische Formmassen gemäß den Ansprüchen 1 bis 5,
dadurch gekennzeichnet,
daß Maleinsäureanhydrid als doppelbindungshaltiges funktionelles Monomeres eingesetzt wird.

**7.** Thermoplastische Formmassen gemäß den Ansprüchen 1 bis 6,
dadurch gekennzeichnet,
daß als Polykondensate Polyamide, Polyester und/oder Polycarbonate eingesetzt werden.

**8.** Verfahren zur Herstellung der Formmassen gemäß den Ansprüchen 1 bis 7,
dadurch gekennzeichnet,

daß die Vereinigung und Reaktion der Komponenten (a) und (b) vor dem eventuellen Zusatz der Komponente (c) erfolgt, wobei die Reaktion im Temperaturbereich zwischen 150 und 350 °C durchgeführt wird und man entweder in Lösung oder in der Schmelze arbeitet.

**9.** Formkörper, hergestellt aus den Formmassen gemäß den Ansprüchen 1 bis 7 bzw. aus den gemäß Anspruch 8 hergestellten Formmassen.

Europäisches Patentamt

# EUROPÄISCHER RECHERCHENBERICHT

Nummer der Anmeldung

EP 91108626.2

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int Cl.5) |
|---|---|---|---|
| P,Y | EP - A2 - 0 391 031 (HÜLS AKTIENGESELLSCHAFT) * Seite 3, Zeilen 9-49; Beispiele; Ansprüche * -- | 1-7 | C 08 L 71/12<br>C 08 L 77/06<br>C 08 L 69/00 |
| Y | EP - A2 - 0 271 699 (GENERAL ELECTRIC COMPANY) * Beispiele; Ansprüche * -- | 1-7 | |
| A | DE - A1 - 3 813 355 (HÜLS AG) * Seite 2, Zeile 36 - Seite 4, Zeile 32; Beispiele; Ansprüche * -- | 1-9 | |
| A | DE - A1 - 3 615 393 (HÜLS AG) * Seite 5, Zeile 29 - Seite 10, Zeile 24; Beispiele; Ansprüche * -- | 1-9 | RECHERCHIERTE SACHGEBIETE (Int Cl.5) |
| D,A | EP - A2 - 0 338 209 (HÜLS AKTIENGESELLSCHAFT) * Beispiele; Ansprüche * ---- | 1-9 | C 08 L 69/00<br>C 08 L 71/00<br>C 08 L 77/00<br>C 08 G 65/00 |

Der vorliegende Recherchenbericht wurde für alle Patentansprüche erstellt.

| Recherchenort | Abschlußdatum der Recherche | Prüfer |
|---|---|---|
| WIEN | 16-10-1991 | TENGLER |

KATEGORIE DER GENANNTEN DOKUMENTEN

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503 03 82